# EUROPÄISCHE PATENTSCHRIFT

(11) **EP 3 307 508 B1**
(45) Veröffentlichungstag und Bekanntmachung des Hinweises auf die Patenterteilung: **23.04.2025**
(21) Anmeldenummer: 16731796.5
(22) Anmeldetag: 27.05.2016
(51) Int. Cl.: B29C 64/118, B33Y 10/00, B29D 99/00, B29C 70/86, B29C 70/78, B29C 70/74, B29C 70/68, B29C 70/52, B29C 48/285, B29C 48/25, B29C 48/155, B29C 48/03, B29C 48/02, B29C 48/00, B29C 37/00

(54) **VERFAHREN ZUR VERSTÄRKUNG EINER GRUNDSTRUKTUR**
METHOD FOR REINFORCING A BASE STRUCTURE
PROCÉDÉ DE RENFORCEMENT D'UNE STRUCTURE DE BASE

(30) Priorität: 11.06.2015 DE 102015007317
(43) Veröffentlichungstag der Anmeldung: 18.04.2018
(73) Patentinhaber: 9T Labs AG, 8048 Zurich (CH)
(72) Erfinder: EICHENHOFER, Martin, 88693 Deggenhausertal (DE); EICHENHOFER, Florian, 88693 Deggenhausertal (DE)
(74) Vertreter: Karl, Christof
(86) Internationale Anmeldenummer: PCT/EP2016/000878
(87) Internationale Veröffentlichungsnummer: WO 2016/198148

(56) Entgegenhaltungen:
- EP-A1- 2 676 784
- EP-A1- 2 781 342
- EP-B1- 2 739 460
- WO-A1-2014/193505
- WO-A1-2015/009938
- WO-A2-2009/055580
- DE-A1- 102011 109 369
- DE-A1- 102014 006 706
- US-A- 5 358 397
- US-A1- 2005 276 945
- US-A1- 2014 361 460

## Beschreibung

Die vorliegende Erfindung betrifft einen Verfahren zur Verstärkung einer vorhandenen Grundstruktur gemäß dem Oberbegriff des Anspruches 1, eine Prozesseinheit gemäss dem Oberbegriff des Anspruchs 13 und ein Computerprogramm gemäß Anspruch 14.

Tragstrukturen umfassen eine Grundstruktur und eine Verstärkungsstruktur. Als flächige Grundstrukturen werden beispielsweise Platten, Scheiben Kuppeln oder Rotationsteilellipsoide eingesetzt. Um eine ausreichende Tragfähigkeit und Steifigkeit der Grundstrukturen zu erhalten, werden in aufwendiger Weise zuerst die Verstärkungsstrukturen, beispielsweise Streben oder Stangen, hergestellt und anschließend werden die Streben und Stangen mit der Grundstruktur verbunden, um die ausreichende Tragfähigkeit und Steifigkeit der Tragstruktur als Kombination aus Grundstruktur und wenigstens einer Verstärkungsstruktur zu erhalten. Dies ist jedoch aufwendig und teuer. Außerdem können die Verstärkungsstrukturen nur mit einem großen Aufwand an unterschiedliche Geometrien von Grundstrukturen angepasst werden.

Aus der US 2014/0061974 A1 ist ein Verfahren zur Herstellung eines dreidimensionalen Objektes aus einem Verbundmaterial bekannt. Zwei oder mehr Materialien werden dabei gleichzeitig als ein Verbundmaterial extrudiert.

Die US 2014/361460 A1 zeigt ein Verfahren, in dem ein hohlraumfreies verstärktes Filament, das einen Kern, der kontinuierlich oder halbkontinuierlich sein kann, und ein Matrixmaterial, das den Kern umgibt, enthält. Das verstärkte Filament wird auf eine Temperatur erhitzt, die über der Schmelztemperatur des Matrixmaterials und unter der Schmelztemperatur des Kerns liegt, bevor das Filament aus einer Extrusionsdüse extrudiert wird.

Die WO 2015/009938 A1 zeigt eine Vorrichtung, in der ein hohlraumfreies verstärktes Filament, das einen Kern, der kontinuierlich oder halbkontinuierlich sein kann, und ein Matrixmaterial, das den Kern umgibt, enthält. Das verstärkte Filament wird auf eine Temperatur erhitzt, die über der Schmelztemperatur des Matrixmaterials und unter der Schmelztemperatur des Kerns liegt, bevor das Filament aus einer Leitungsdüse aufgebracht wird.

Die DE 10 2011 109369 A1 zeigt ein Verfahren und eine Vorrichtung zur Herstellung eines dreidimensionalen Gegenstandes aus verfestigbarem Material. Dazu wird das verfestigbare Material auf einen Objektträger für den herzustellenden dreidimensionalen Gegenstand ausgetragen, wobei dem verfestigbaren Material ein endloses Faserelement zugeführt und eingebettet wird. Der Objektträger und eine Austragseinheit andererseits sind relativ zueinander im Raum bewegbar.

Die WO 2014/193505 A1 zeigt eine Maschine zur Herstellung eines faserverstärkten Bauteils durch additive Fertigung. Die Maschine umfasst eine Matrixzufuhr, die eine Vielzahl von Matrixschichten auf der Oberfläche abscheidet, und eine Faserzufuhr, die eine Faserschicht auf mindestens einer der Vielzahl von Matrixschichten abscheidet. Die Ablagerung der Vielzahl von Matrixschichten und der Faserschicht kann durch einen Computer gesteuert werden.

Die EP 2 781 342 A1 zeigt ein Verfahren zur Herstellung eines Gegenstandes. Flüssiges Matrixmaterial wird mit einer Faser in Kontakt gebracht und eine beschichtete Faser wird auf ein Substrat extrudiert, das eine zuvor extrudierte beschichtete Faser umfasst. Die Beschichtung der extrudierten Faser verschmilzt mit der zuvor extrudierten beschichteten Faser und verfestigt sich.

Die EP 2 676 784 A1 zeigt ein Verfahren zur Herstellung eines Gegenstandes, wobei ein teilweise geschmolzenes Filament aus dem Extrusionskopf auf eine Bauplatte extrudiert wird, wobei ein Verstärkungsanteil des teilweise geschmolzenen Filaments in einem teilkristallinen Zustand verbleibt, während es aus dem Extrusionskopf extrudiert wird. Ein Matrixanteil der extrudierten Linie verfestigt sich, nachdem die extrudierte Linie auf dem Substrat gebildet worden ist, wobei der Verstärkungsanteil einen höheren Schmelzpunkt und eine höhere Kristallinität als der Matrixanteil hat.

Die US 2005/0276945 A1 zeigt ein Teil aus einem Verbundmaterial und ein Verfahren zur Herstellung des Teils aus dem Verbundmaterial. Eine erste polymerische Schicht ist mit einer zweiten polymerischen Schicht verbunden, wobei wenigstens eine überhängende Rippe zur Verbindung der ersten und zweiten polymerischen Schicht vorhanden ist.

Die DE 10 2014 006 706 A1 zeigt ein Verfahren zur Herstellung eines zweidimensionalen oder räumlichen Fachwerkes mit Stäben, die an Knoten mit wenigstens einem anderen Stab und/oder einem anderen Bauteil verbunden sind, aus einem Verbundmaterial mit Fasern und einer Matrix mit den Schritten: Herstellen der Stäbe aus dem Verbundmaterial, Verbinden der Stäbe an den Knoten mit wenigstens einem anderen Stab und/oder einem anderen Bauteil, wobei die Stäbe mit Pultrusion und/oder mit Extrusion hergestellt werden und eine Pultrusionseinheit und/oder eine Extrusionseinheit im Raum bewegt wird, so dass die pultrudierten und/oder extrudierten Stäbe nach der Pultrusion und/oder Extrusion jeweils an der erforderlichen Position innerhalb des Fachwerkes pultrudiert und/oder extrudiert werden.

Die Aufgabe der vorliegenden Erfindung besteht deshalb darin, ein Verfahren zur Verstärkung einer vorhandenen Grundstruktur mit wenigstens einer Verstärkungsstruktur zu einer Tragstruktur, ein Computerprogramm und ein Computerprogrammprodukt zur Verfügung zu stellen, bei dem die Grundstruktur preiswert und zuverlässig mit einem geringen technischen Aufwand mit Verstärkungsstrukturen verstärkt werden kann.

Diese Aufgabe wird gelöst mit einem Verfahren gemäss Anspruch 1. Offenbart ist weiterhin ein Verfahren zur Verstärkung einer vorhandenen Grundstruktur mit wenigstens einer Verstärkungsstruktur zu einer Tragstruktur und/oder mit einem Verfahren zur Herstellung einer Tragstruktur mit den Schritten: vorzugsweise zur Verfügung stellen oder Herstellen einer Grundstruktur, Herstellen der wenigstens einen Verstärkungsstruktur, Verbinden der wenigstens einen Verstärkungsstruktur mit der Grundstruktur, so dass die wenigstens eine Verstärkungsstruktur in einer Verbindungsposition mit der Grundstruktur verbunden ist und die Grundstruktur zusammen mit der wenigstens einen Verstärkungsstruktur die Tragstruktur bildet, wobei die wenigstens eine Verstärkungsstruktur, insbesondere sämtliche Verstärkungsstrukturen, aus einem Verbundmaterial mit Fasern und einer Matrix mittels Pultrusion und/oder mit Extrusion hergestellt wird bzw. werden und eine Pultrusionseinheit und/oder eine Extrusionseinheit im Raum bewegt wird, so dass die wenigstens eine Verstärkungsstruktur, insbesondere sämtliche Verstärkungsstrukturen, nach der Pultrusion und/oder Extrusion jeweils an der erforderlichen Verbindungsposition auf die Grundstruktur pultrudiert und/oder extrudiert wird bzw. werden und bezüglich der Länge der jeweiligen Verstärkungsstruktur zu mehr als 50% mit der Grundstruktur verbunden sind, so dass die Länge der Verbindung zwischen der Verstärkungsstruktur und der Grundstruktur größer ist als 50% der Länge der Verstärkungsstruktur. Die Verstärkungsstrukturen werden an der erforderlichen Verbindungsposition auf und/oder an der Grundstruktur pultrudiert und/oder extrudiert, so dass nach dem Pultrudieren und/oder Extrudieren die wenigstens eine Verstärkungsstruktur nicht mehr relativ zu der Grundstruktur bewegt werden muss. Die Kosten für die Herstellung der Tragstruktur können dadurch wesentlich reduziert werden, da die wenigstens eine Verstärkungsstruktur bereits an derjenigen Verbindungspositionen hergestellt wird, an welcher die wenigstens eine Verstärkungsstruktur mit der Grundstruktur zu verbinden bzw. befestigen ist. Eine aufwendige nachträgliche Anordnung bereits hergestellter Verstärkungsstrukturen an den erforderlichen Verbindungspositionen ist dadurch in vorteilhafter Weise nicht mehr erforderlich.

In einer weiteren Ausführungsform wird bzw. werden mit der pultrudierten und/oder extrudierten wenigstens einen Verstärkungsstruktur, insbesondere sämtlichen Verstärkungsstrukturen, nach dem Pultrudieren und/oder Extrudieren und dem Auflegen auf die Grundstruktur keine Bewegung relativ zu der Grundstruktur ausgeführt und/oder die Matrix der pultrudierten und/oder extrudierten Verstärkungsstruktur, insbesondere sämtliche Verstärkungsstrukturen, an der erforderlichen Verbindungsposition an und/oder auf der Grundstruktur erhärtet und/oder die Pultrusion und Extrusion gleichzeitig und/oder kontinuierlich ausgeführt wird.

In einer weiteren Ausgestaltung wird für die Herstellung der wenigstens einen Verstärkungsstruktur als erster Schritt das Pultrudieren ausgeführt und als zweiter Schritt wird das Extrudieren ausgeführt, so dass die in dem ersten Schritt teilweise hergestellte pultrudierte wenigstens eine Verstärkungsstruktur, insbesondere sämtliche Verstärkungsstrukturen, in dem zweiten Schritt mit Extrudieren nachbearbeitet wird bzw. werden und/oder die wenigstens eine Verstärkungsstruktur, vorzugsweise sämtliche Verstärkungsstrukturen, insbesondere kontinuierlich, hergestellt wird bzw. werden, indem die Pultrusionseinheit und/oder Extrusionseinheit, insbesondere kontinuierlich, im Raum in einer Bewegungsbahn bewegt wird an und/oder im Bereich der erforderlichen Verbindungsposition in einem Abstand zu der Grundstruktur. Der Abstand ist gering im Bereich weniger mm oder cm. Die Pultrusionseinheit und/oder Extrusionseinheit wird im Wesentlichen an der erforderlichen Verbindungsposition bewegt, da nach dem Austreten der wenigstens einen Verstärkungsstruktur aus der Prozesseinheit die Verstärkungsstruktur noch einen geringen Abstand zu der Grundstruktur aufweist.

Zweckmäßig wird die wenigstens eine Verstärkungsstruktur als ein gerader oder gekrümmter Stab hergestellt und/oder die Bewegungsbahn im Wesentlichen eine Gerade und/oder, vorzugsweise gekrümmte, Linie ist und/oder die Pultrusionseinheit und/oder Extrusionseinheit mit einem Roboter bewegt wird und/oder nach dem Pultrudieren und/oder Extrudieren je einer Verstärkungsstruktur mit einer Schneideeinheit das Verbundmaterial mit den Fasen und der Matrix abgetrennt wird.

In einer ergänzenden Variante wird je wenigstens eine Verstärkungsstruktur hergestellt deren Länge wenigstens um das 2-, 4-, 5-, 10- oder 20-Fache größer ist als der Durchmesser dieser Verstärkungsstruktur und/oder die Querschnittsform der wenigstens einen Verstärkungsstruktur, insbesondere sämtlicher Verstärkungsstrukturen, beim Extrudieren und/oder beim Auflegen auf die Grundstruktur ausgebildet wird bzw. werden und/oder die Länge der Verstärkungsstruktur, insbesondere sämtlicher Verstärkungsstrukturen, durch die Länge der Bewegungsbahn der Pultrusionseinheit und/oder Extrusionseinheit ausgebildet wird bzw. werden und/oder die wenigstens eine Verstärkungsstruktur, insbesondere sämtliche Verstärkungsstrukturen, ohne einem Hohlraum und/oder ohne einem Hohlkanal hergestellt werden. Beim Auflegen der wenigstens einen Verstärkungsstruktur auf die Grundstruktur ist das Verbundmaterial nicht vollständig abgekühlt und damit verformbar, so dass das Verbundmaterial an die Geometrie der Grundstruktur durch Verformen angepasst wird.

In einer ergänzenden Ausgestaltung werden die Fasern und vorzugsweise die Matrix kontinuierlich zuerst durch die Pultrusionseinheit und anschließend durch die Extrusionseinheit gefördert und/oder Hybridgarne mit Fasern und Matrix werden zu der Pultrusionseinheit gefördert oder die Fasern und die Matrix werden getrennt zu der Pultrusionseinheit gefördert und/oder die Fasern oder die Hybridgarne von Rollen abgewickelt und zu der Pultrusionseinheit gefördert werden und/oder die wenigstens eine Verstärkungsstruktur, insbesondere sämtliche Verstärkungsstrukturen, herstellt wird bzw. werden, so dass wenigstens eine Faser, vorzugsweise mehrere Fasern, an einer Außenseite der wenigstens einen Verstärkungsstruktur, insbesondere sämtlicher Verstärkungsstrukturen, angeordnet ist bzw. sind und/oder die wenigstens eine Verstärkungsstruktur, insbesondere sämtliche Verstärkungsstrukturen, herstellt wird bzw. werden, so dass wenigstens eine Faser, vorzugsweise mehrere Fasern, keine vollständige Umhüllung mit der Matrix aufweist bzw. aufweisen und/oder die wenigstens eine Verstärkungsstruktur, insbesondere sämtliche Verstärkungsstrukturen, herstellt wird bzw. werden, so dass zwischen den Fasern die Matrix angeordnet ist. In den Verstärkungsstrukturen sind die Fasern mittels der Matrix stoffschlüssig miteinander fest verbunden, da die Matrix erhärtet ist. Die Fasern sind dabei auch an der Außenseite der wenigstens einen Verstärkungsstruktur angeordnet, so dass an der Außenseite der wenigstens einen Verstärkungsstruktur die Fasern sichtbar bzw. greifbar sind. Insbesondere sind somit nicht in einem inneren Bereich der Verstärkungsstrukturen die Fasern angeordnet und in einer äußeren Hülle die Matrix. Vielmehr sind die Fasern und die Matrix auf die Querschnittsform verteilt und zwischen den Fasern ist auch die Matrix angeordnet. Vorzugsweise umfasst dabei eine Verstärkungsstruktur, insbesondere Stab, beispielsweise wenigstens zwei, drei, fünf oder zehn Fasern.

In einer zusätzlichen Ausführungsform werden in der Pultrusionseinheit während der Pultrusion mittels der Matrix die Fasern stoffschlüssig miteinander verbunden, insbesondere indem die Matrix erwärmt und/oder erhärtet wird und/oder die Matrix während des Fördern von der Pultrusionseinheit zu der Extrusionseinheit abgekühlt und/oder erhärtet wird, so dass dadurch die Fasern stoffschlüssig miteinander verbunden werden und/oder mittels einer Fördereinrichtung, beispielsweise zwei Förderrädern, die Fasern und die Matrix gefördert werden, insbesondere indem die Fördereinrichtung auf die Fasern mit der Matrix während des Fördern der Fasern mit der Matrix von der Pultrusionseinheit zu der Extrusionseinheit auf die Fasern mit der Matrix einwirkt und/oder die Fasern und die Matrix mittels Pultrusion zuerst stoffschlüssig, insbesondere mittels Erwärmen und/oder Erhärten der Matrix, miteinander verbunden werden und anschließend beim Extrudieren in der Extrusionseinheit wenigstens teilweise die Querschnittsform der wenigstens einen Verstärkungsstruktur ausgeformt wird und/oder die wenigstens eine Verstärkungsstruktur, insbesondere sämtliche Verstärkungsstrukturen, mit einem maximalen Durchmesser zwischen 1 mm und 30 mm, insbesondere zwischen 2 mm und 20 mm, extrudiert wird bzw. werden.

In einer zusätzlichen Ausgestaltung werden in der Extrusionseinheit die Fasern mit der Matrix erwärmt und/oder in der Extrusionseinheit die Querschnittsform, vorzugsweise kreisförmig, ellipsenförmig oder rechteckig, der wenigstens einen Verstärkungsstruktur ausgeformt wird während des Extrudierens und vorzugsweise aufgrund des Kontaktes der wenigstens einen Verstärkungsstruktur mit der Oberfläche der Grundstruktur die Querschnittsform nochmals ausgeformt wird und/oder in der Pultrusionseinheit die Fasern mit der Matrix zuerst erwärmt werden, während des Förderns der Fasern mit der Matrix von der Pultrusionseinheit zu der Extrusionseinheit die Fasern abkühlen und in der Extrusionseinheit der Fasern mit der Matrix nochmals erwärmt werden und/oder die Fasern mit der Matrix in der Pultrusionseinheit mit einer, vorzugsweise ersten, Kühleinrichtung, aktiv gekühlt werden und/oder die Fasern mit der Matrix nach dem Fördern durch die Extrusionseinheit mit einer, vorzugsweise zweiten, Kühleinrichtung, beispielsweise einem Gebläse, aktiv gekühlt werden und/oder die wenigstens eine Verstärkungsstruktur, insbesondere sämtliche Verstärkungsstrukturen, bezüglich der Länge der jeweiligen Verstärkungsstruktur zu mehr als 70%, 80% oder 90% mit der Grundstruktur verbunden sind, so dass die Länge der Verbindung zwischen der Verstärkungsstruktur und der Grundstruktur größer ist als 70%, 80% oder 90% der Länge der Verstärkungsstruktur.

In einer weiteren Ausgestaltung wird bzw. werden die wenigstens eine Verstärkungsstruktur, insbesondere sämtliche Verstärkungsstrukturen, mit Kunststoff, vorzugsweise thermoplastischen und/oder duroplastischen Kunststoff und/oder Kunststoff als reaktiver Hotmelt bzw. reaktiver Schmelzklebstoff bzw. reaktiver Schmelzpolymer, als Matrix hergestellt und/oder die wenigstens eine Verstärkungsstruktur, insbesondere sämtliche Verstärkungsstrukturen, mit Fasern als Glasfasern, Karbonfasern und/oder Aramidfasern, hergestellt wird bzw. werden und/oder die wenigstens eine Verstärkungsstruktur, insbesondere sämtliche Verstärkungsstrukturen, ausschließlich aus Matrix und Fasern hergestellt wird bzw. werden und/oder die wenigstens eine Verstärkungsstruktur, insbesondere sämtliche Verstärkungsstrukturen, hergestellt wird bzw. werden, so dass der Massenanteil oder Volumenanteil der Fasern wenigstens 30%, 40%, 60% oder 80% beträgt und/oder die wenigstens eine Verstärkungsstruktur, insbesondere sämtliche Verstärkungsstrukturen, hergestellt wird bzw. werden, so dass der Massenanteil oder Volumenanteil der Matrix weniger als 70%, 60%, 40% oder 20% beträgt und/oder die wenigstens eine Verstärkungsstruktur, insbesondere sämtliche Verstärkungsstrukturen, hergestellt wird bzw. werden, so dass die wenigstens eine Verstärkungsstruktur ausschließlich aus den Fasern und der Matrix ausgebildet ist bzw. sind. Kunststoffe als reaktiver Hotmelt bzw. reaktiver Schmelzklebstoff bzw. reaktiver Schmelzpolymer sind Kunststoffe die, vorzugsweise zunächst thermoplastische Eigenschaften aufweisen und/oder ein thermoplastischer Kunststoff sind, und nach wenigstens einem Veränderungsparameter, beispielsweise das Erwärmen bzw. Erhitzen und/oder das Aussetzten an Feuchtigkeit und/oder der Bestrahlung mit UV-Licht und/oder einem Sauerstoffentzug, durch eine chemische Veränderung, insbesondere wenigstens eine chemische Reaktion, duroplastische Eigenschaften aufweisen und/oder ein duroplastischer Kunststoff sind. Bei einem Veränderungsparameter des Erwärmens bzw. Erhitzens kann das Erwärmen und/oder Erhitzen in der Pultrusionseinheit und/oder Extrusionseinheit als Veränderungsparameter genutzt werden und nach dem anschließenden Abkühlen und Erhärten der Matrix auf der Grundstruktur weist die Tragstruktur, insbesondere die Verstärkungsstruktur, auch bei einem Erwärmen oder Erhitzen eine ausreichende Tragfähigkeit und/oder Steifigkeit auf. Duroplastische Kunststoffe sind auch bei einem Erwärmen bzw. Erhitzen zu 100% ein Festkörper, d. h. das Erhärten ist nicht durch Erwärmen umkehrbar. Das Erwärmen und/oder Erhitzen in der Pultrusionseinheit und/oder Extrusionseinheit wird beispielsweise auf Temperaturen zwischen 60°C und 200° C ausgeführt. Bei einem reaktiven Hotmelt beispielsweise auf Basis von Polymeren wird die chemische Veränderung durch eine Verbindung zwischen bestehenden Makromolekularketten (sog. Cross links) ausgeführt. Reaktive Hotmelts sind beispielsweise auf Basis von EVA (Ethylen-Vinyl-Acetat) und Polyester oder auf Basis von PA (Polyamid) oder auf Basis von Polymeren oder auf Basis von PUR aufgebaut. Reaktive Hotmelts können auch teilweise Stoffe aufweisen, die keine Kunststoffe bzw. Klebstoffe sind. Klebstoffe werden insofern auch als Kunststoffe betrachtet. Wesentliche Eigenschaft des reaktiven Hotmelts bzw. reaktiven Schmelzklebstoffes bzw. reaktiven Schmelzpolymers ist somit, dass nach dem Erhärten aufgrund des Einwirkens des wenigstens einen Veränderungsparameters ein Erwärmen der wenigstens einen Verstärkungsstruktur kein Schmelzen des reaktiven Hotmelts bzw. der Matrix aus dem reaktiven Hotmelt bewirkt, so dass trotz des Erwärmens auf für die Anwendung normale Temperaturen, beispielsweise auf Temperaturen bis 200° C oder 300° C, die Tragfähigkeit und/oder Steifigkeit der Tragstruktur weiterhin gewährleistet ist.

In einer weiteren Ausgestaltung wird bzw. werden die wenigstens eine Verstärkungsstruktur, insbesondere sämtliche Verstärkungsstrukturen, hergestellt, so dass die Länge der Fasern, insbesondere sämtlicher Fasern, in je einer Verstärkungsstruktur im Wesentlichen der Länge der wenigstens einen Verstärkungsstruktur entspricht und/oder die wenigstens eine Verstärkungsstruktur, insbesondere sämtliche Verstärkungsstrukturen, auf der Oberfläche der Grundstruktur abkühlen und erhärten. Im Wesentlichen bedeutet dabei, dass die Länge der Verstärkungsstruktur mit einer Abweichung von weniger als 30%, 20%, 10% oder 5% der Länge der Fasern in der jeweiligen Verstärkungsstruktur entspricht.

Erfindungsgemäss wird vor dem Auflegen der wenigstens einen Verstärkungsstruktur auf die Oberfläche der Grundstruktur an der Oberfläche der Grundstruktur lokal im Bereich einer späteren Kontaktfläche zwischen der wenigstens einen Verstärkungsstruktur und der Grundstruktur der Werkstoff der Grundstruktur abgetragen.

Vorzugsweise wird die Grundstruktur spanabhebend abgetragen, insbesondere mit einem Werkzeug, vorzugsweise Fräswerkzeug, und das Werkzeug wird von einem Roboter entlang der Oberfläche der Grundstruktur bewegt.

In einer zusätzlichen Variante wird in die Grundstruktur aufgrund des Abtragens des Werkstoffes der Grundstruktur eine, vorzugsweise längliche, Aussparung eingearbeitet und in die Aussparung wird anschließend die wenigstens eine Verstärkungsstruktur eingeführt, so dass eine formschlüssige Verbindung zwischen der wenigstens einen Verstärkungsstruktur und der Grundstruktur an der Aussparung, insbesondere nach dem Abkühlen und Erhärten der Matrix, ausgebildet wird.

In einer ergänzenden Ausgestaltung wird vor dem Auflegen der wenigstens einen Verstärkungsstruktur auf die Oberfläche der Grundstruktur die Oberfläche der Grundstruktur lokal im Bereich einer späteren Kontaktfläche zwischen der wenigstens einen Verstärkungsstruktur und der Grundstruktur mit einer Grundstrukturheizeinrichtung, insbesondere einem Laser oder einem Infrarotstrahler, erwärmt.

In einer weiteren Ausführungsform wird die Grundstrukturheizeinrichtung von einem Roboter entlang der Oberfläche der Grundstruktur bewegt und/oder aufgrund des Erwärmens der Oberfläche der Grundstruktur wird lokal im Bereich einer späteren Kontaktfläche zwischen der wenigstens einen Verstärkungsstruktur und der Grundstruktur der Werkstoff der Grundstruktur seine Eigenschaft verändert, insbesondere zähfließend und/oder klebrig und/oder flüssig, so dass eine stoffschlüssige Verbindung zwischen der Matrix der wenigstens einen Verstärkungsstruktur und dem Werkstoff der Grundstruktur, insbesondere nach dem Abkühlen, ausgebildet wird.

In einer ergänzenden Ausgestaltung wird vor dem Auflegen der wenigstens einen Verstärkungsstruktur auf die Oberfläche der Grundstruktur lokal im Bereich einer späteren Kontaktfläche zwischen der wenigstens einen Verstärkungsstruktur und der Grundstruktur mit einer Zugabevorrichtung ein Stoff, insbesondere ein Klebstoff und/oder ein Haftvermittler, zur Verbesserung der Verbindung zwischen der wenigstens einen Verstärkungsstruktur und der Grundstruktur aufgebracht.

Vorzugsweise wird die Zugabevorrichtung von einem Roboter entlang der Oberfläche der Grundstruktur bewegt.

In einer ergänzenden Ausgestaltung wird zuerst die Grundstruktur hergestellt oder zur Verfügung gestellt und anschließend wird die wenigstens eine Verstärkungsstruktur hergestellt.

Zweckmäßig wird die Grundstruktur mit einem anderen Verfahren hergestellt als die wenigstens eine Verstärkungsstruktur.

Zweckmäßig ist die Grundstruktur aus Metall, insbesondere Stahl und/oder Aluminium, und/oder aus Kunststoff, insbesondere faserverstärkten Kunststoff, und/oder in Sandwichbauweise aus zwei unterschiedlichen Materialien ausgebildet.

In einer weiteren Variante ist die Grundstruktur als ein flächiges Bauteil, eine Platte, eine Scheibe, eine Teilkugelschale, eine Kuppel, ein Rotationsteilellipsoid, eine Wanne oder ein Becher ausgebildet.

In einer zusätzlichen Ausgestaltung ist die Grundstruktur und/oder die Tragstruktur ein tragendes Bauteil, beispielsweise ein Träger, eine Stütze, eine Strebe, ein Flansch, eine Kuppel, eine Platte, eine Scheibe, eine Teilkugelschale, eine Wandung oder eine Decke, für verschiedenste Anwendungen, insbesondere im Maschinenbau, Bauwesen oder Elektrotechnik.

In einer ergänzenden Ausführungsform wird die wenigstens eine Verstärkungsstruktur mit einer ebenen und/oder gekrümmten Oberfläche der Grundstruktur verbunden, vorzugsweise indem die wenigstens eine Verstärkungsstruktur mittels Extrusion und/oder Pultrusion an und/oder auf der ebenen und/oder gekrümmten Oberfläche der Grundstruktur hergestellt wird.

In einer zweckmäßigen Ausgestaltung ist die wenigstens eine Verstärkungsstruktur, vorzugsweise sämtliche Verstärkungsstrukturen, mit Kunststoff, vorzugsweise thermoplastischen Kunststoff und/oder duroplastischen Kunststoff und/oder Kunststoff als reaktiver Hotmelt bzw. reaktiver Schmelzklebstoff bzw. reaktiver Schmelzpolymer, als Matrix ausgebildet und/oder die wenigstens eine Verstärkungsstruktur, vorzugsweise sämtliche Verstärkungsstrukturen, sind mit Fasern als Glasfasern, Karbonfasern und/oder Aramidfasern, ausgebildet und/oder die wenigstens eine Verstärkungsstruktur, vorzugsweise sämtliche Verstärkungsstrukturen, ist bzw. sind ausschließlich aus Fasern und Matrix ausgebildet und/oder der Massenanteil oder Volumenanteil der Fasern an der wenigstens eine Verstärkungsstruktur, vorzugsweise sämtliche Verstärkungsstrukturen, beträgt wenigstens 30%, 40%, 60% oder 80% und/oder der Massenanteil oder Volumenanteil der Matrix an der wenigstens einen Verstärkungsstruktur, vorzugsweise sämtlichen Verstärkungsstrukturen, beträgt weniger als 70%, 60%, 40% oder 20% und/oder die wenigstens eine Verstärkungsstruktur, vorzugsweise sämtliche Verstärkungsstrukturen, sind ausschließlich aus den Fasern und der Matrix ausgebildet und/oder die wenigstens eine Verstärkungsstruktur, vorzugsweise sämtliche Verstärkungsstrukturen, sind gerade und/oder gekrümmt ausgebildet und/oder die Länge der wenigstens eine Verstärkungsstruktur, vorzugsweise sämtliche Verstärkungsstrukturen, ist wenigstens um das 2-, 4-, 5-, 10- oder 20-Fache größer als der Durchmesser der wenigstens eine Verstärkungsstruktur, vorzugsweise sämtliche Verstärkungsstrukturen, und/oder die wenigstens eine Verstärkungsstruktur, vorzugsweise sämtliche Verstärkungsstrukturen, sind ohne Hohlraum ausgebildet und/oder an der wenigstens eine Verstärkungsstruktur, vorzugsweise sämtliche Verstärkungsstrukturen, ist an der Außenseite wenigstens eine Faser angeordnet bzw. sind vorzugsweise mehrere Fasern angeordnet, so dass vorzugsweise die wenigstens eine Faser, vorzugsweise die mehreren Fasern, an der Außenseite der wenigstens einen Verstärkungsstruktur, vorzugsweise sämtliche Verstärkungsstrukturen, sichtbar und/oder greifbar ist bzw. sind und/oder wenigstens eine Faser, vorzugsweise mehrere Fasern, an der wenigstens eine Verstärkungsstruktur, vorzugsweise sämtliche Verstärkungsstrukturen, keine vollständige Umhüllung mit der Matrix aufweist bzw. aufweisen und/oder die Fasern sind mit zwischen den Fasern angeordneter Matrix stoffschlüssig miteinander verbunden.

Die Erfindung umfasst ferner eine Prozesseinheit gemäss Anspruch 13 und ein Computerprogramm gemäss Anspruch 14 mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Bestandteil der Offenbarung ist außerdem ein Computerprogrammprodukt mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Im Nachfolgenden werden Ausführungsbeispiele der Erfindung unter Bezugnahme auf die beigefügten Zeichnungen näher beschrieben.

Es zeigt:
- Fig. 1: einen vereinfachten Längsschnitt einer Prozesseinheit mit einer Pultrusionseinheit und Extrusionseinheit zur Durchführung des Verfahrens,
- Fig. 2: eine Seitenansicht der Prozesseinheit während der Durchführung des Verfahrens,
- Fig. 3: einen Querschnitt einer Grundstruktur vor dem Aufbringen einer Verstärkungsstruktur,
- Fig. 4: den Querschnitt der Grundstruktur gemäß Fig. 3 nach dem Aufbringen der Verstärkungsstruktur,
- Fig. 5: einen Querschnitt von Grundstrukturen und Verstärkungsstrukturen in einem ersten Ausführungsbeispiel,
- Fig. 6: den Querschnitt von Grundstrukturen und Verstärkungsstrukturen in einem zweiten Ausführungsbeispiel,
- Fig. 7: eine Draufsicht auf eine Grundstruktur und Verstärkungsstrukturen in einem dritten Ausführungsbeispiel,
- Fig. 8: eine perspektivische Ansicht der Grundstruktur mit Verstärkungsstrukturen gemäß Fig. 7,
- Fig. 9: eine Draufsicht auf eine Grundstruktur und Verstärkungsstrukturen in einem vierten Ausführungsbeispiel,
- Fig. 10: eine perspektivische Ansicht der Grundstruktur mit Verstärkungsstrukturen gemäß Fig. 9,
- Fig. 11: eine Draufsicht auf eine Grundstruktur und Verstärkungsstrukturen in einem fünften Ausführungsbeispiel,
- Fig. 12: eine perspektivische Ansicht der Grundstruktur mit Verstärkungsstrukturen gemäß Fig. 11,
- Fig. 13: eine Seitenansicht auf eine Grundstruktur und Verstärkungsstrukturen in einem sechsten Ausführungsbeispiel,
- Fig. 14: eine perspektivische Ansicht der Grundstruktur mit Verstärkungsstrukturen gemäß Fig. 13.

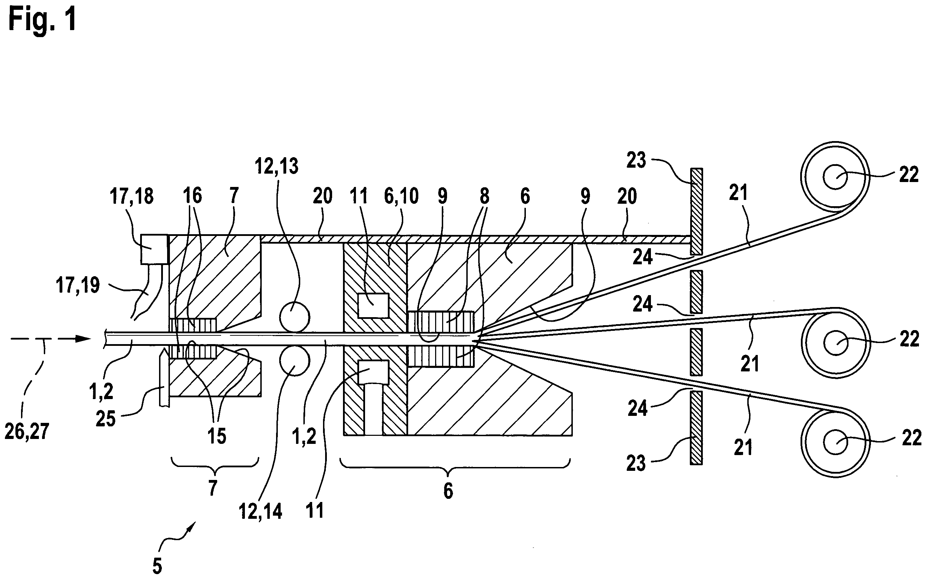

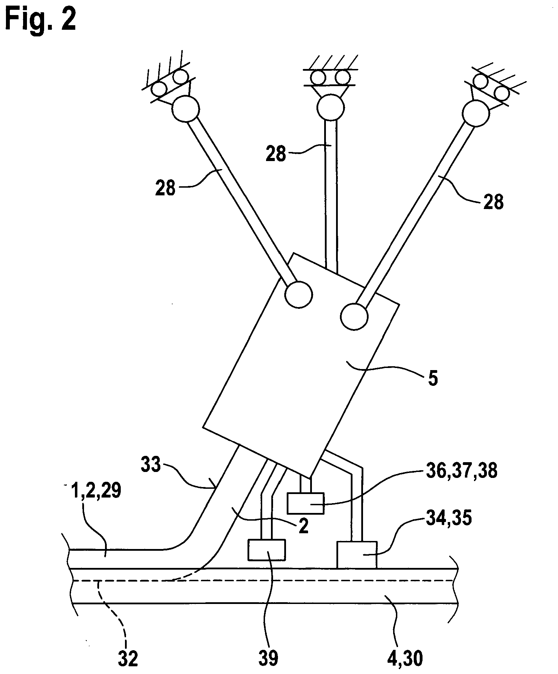

In Fig. 1 und 2 ist eine Prozesseinheit 5 zur Herstellung einer Verstärkungsstruktur 1 dargestellt. Die Prozesseinheit 5 umfasst eine Pultrusionseinheit 6 und eine Extrusionseinheit 7. In der Pultrusionseinheit 6 ist ein Pultrusionskanal 9 ausgebildet und in einer Richtung von rechts nach links gemäß der Darstellung in Fig. 1 weist der Pultrusionskanal 9 zunächst einen konisch sich verjüngenden Abschnitt und anschließend einen Abschnitt mit einem konstanten Durchmesser auf. An dem Pultrusionskanal 9 in dem Abschnitt mit dem konstanten Durchmesser ist in einer Richtung gemäß der Darstellung in Fig. 1 von rechts nach links sowie in einer Förderrichtung von Hybridgarnen 21 bzw. der herzustellenden bzw. hergestellten Verstärkungsstruktur 1 zuerst eine erste Heizeinrichtung 8 angeordnet und anschließend eine erste Kühleinrichtung 10. An der ersten Kühleinrichtung 10 ist ein Kühlkanal 11 ausgebildet, durch den ein Kühlfluid durchgeleitet wird zur Kühlung der teilweise hergestellten Verstärkungsstruktur 1. Die Extrusionseinheit 7 umfasst einen Extrusionskanal 15 und der Extrusionskanal 15 umfasst einen ersten sich konisch verjüngenden Abschnitt und einen zweiten Abschnitt mit einem konstanten Durchmesser. An dem zweiten Abschnitt des Extrusionskanales 15 mit dem konstanten Durchmesser ist eine zweite Heizeinrichtung 16 ausgebildet. Die erste und zweite Heizeinrichtung 8, 16 ist vorzugsweise als eine elektrische Widerstandsheizung ausgebildet. In der Förderrichtung der herzustellenden Verstärkungsstruktur 1 durch den Extrusionskanal 15 ist zuerst der konisch sich verjüngende Abschnitt des Extrusionskanales 15 und anschließend der Abschnitt des Extrusionskanales 15 mit dem konstanten Durchmesser ausgebildet. Zwischen der Pultrusionseinheit 6 und der Extrusionseinheit 7 ist eine Fördereinrichtung 12 ausgebildet. Die Fördereinrichtung 12 umfasst ein erstes Förderrad 13 und ein zweites Förderrad 14, welche von einem nicht dargestellten Elektromotor angetrieben werden. Die teilweise hergestellte Verstärkungsstruktur 1 ist zwischen den beiden Förderräden 13, 14 angeordnet, so dass die teilweise hergestellte Verstärkungsstruktur 1 mit der Fördereinrichtung 12 aus der Pultrusionseinheit 6 herausgezogen wird und mit der Fördereinrichtung 12 in die Extrusionseinheit 7 eingeschoben wird.

Die Pultrusionseinheit 6 und die Extrusionseinheit 7 sind mit einem Verbindungsteil 20, beispielsweise einem in Fig. 1 nur teilweise dargestellten Gehäuse, miteinander verbunden. An dem Verbindungsteil 20 ist ferner ein Zuführungsteil 23 mit drei Führungsbohrungen 24 befestigt. Auf drei Rollen 22 ist jeweils ein Hybridgarn 21 aufgerollt. Das Hybridgarn 21 besteht aus einer Faser als Glasfaser und weist ferner die Matrix aus einem thermoplastischen Kunststoff auf. Die Matrix als dem thermoplastischen Kunststoff ist dabei in dem Hybridgarn 21 als eine faserförmige Matrix bzw. als eine Matrixfaser angeordnet. Das Hybridgarn 21 ist biegbar und kann somit von der Rolle 22 abgerollt werden. An der Extrusionseinheit 7 ist ferner eine zweite Kühleinheit 17 befestigt. Die zweite Kühleinheit 17 umfasst ein Gebläse 18 und ein Kühlrohr 19. Mittels des Gebläses 18 wird Umgebungsluft durch das Kühlrohr 19 geleitet, gezielt zu dem Bereich der Verstärkungsstruktur 1 unmittelbar nach dem Verlassen der Extrusionseinheit 7. Eine Schneideeinheit 25 dient dazu, die an der Extrusionseinheit 7 extrudierte Verstärkungsstruktur 1 soweit erforderlich abzuschneiden und dadurch ein Ende der Verstärkungsstruktur 1 herstellen zu können.

Während der Herstellung der Verstärkungsstruktur 1 aus dem Verbundmaterial 29 mit den Fasern und der Matrix wird das Verbundmaterial 29 gemäß der Darstellung in Fig. 1 zuerst durch die Pultrusionseinheit 6 und anschließend durch die Extrusionseinheit 7 mittels der Fördereinrichtung 12 gefördert, jedoch erfolgen beide Vorgänge aufgrund der Länge der Stäbe 2 und Abstandes zwischen der Pultrusionseinheit 6 und der Extrusionseinheit 7 gleichzeitig. Während des Förderns des Verbundmateriales 29 wird somit der Hybridgarn 21 von den drei Rollen 22 abgerollt und in den konisch sich verjüngenden Abschnitt des Pultrusionskanales 9 eingeführt. An dem zweiten Abschnitt des Pultrusionskanales 9 mit dem konstanten Durchmesser werden die drei Hybridgarne 21 mit der ersten Heizeinrichtung 8 erwärmt, so dass der thermoplastische Kunststoff der Matrix an den Hybridgarnen 21 schmilzt und dadurch die Glasfasern in den drei Hybridgarnen 21 mittels der Matrix aus dem thermoplastischen Kunststoff stoffschlüssig miteinander verbunden werden als Pultrusionsvorgang. Anschließend wird das Verbundmaterial 29 mit den Fasern und der Matrix zu dem Abschnitt des Pultrusionskanales 9 mit der ersten Kühleinrichtung 10 gefördert bzw. bewegt, so dass dadurch das Verbundmaterial 29 mit den Glasfasern und dem thermoplastischen Kunststoff abgekühlt und dadurch erhärtet wird. Nach dem Austreten des Verbundmateriales 29 aus den Fasern und der Matrix wird das Verbundmaterial 29 mit der Matrix aus der bereits teilweise hergestellten Verstärkungsstruktur 1 von der Fördereinrichtung 12 in die Extrusionseinheit 7 eingefördert bzw. hineingeführt. Aufgrund des Abkühlens des Verbundmateriales 29 mit den Fasern in der ersten Kühleinrichtung 10 kann das Verbundmaterial 29 mit den Fasern von der Fördereinrichtung 12 gefördert werden. In der Extrusionseinheit 7 wird das Verbundmaterial 29 mit den Fasern und der Matrix an dem Abschnitt des Extrusionskanales 15 mit dem konstanten Durchmesser von der zweiten Heizeinrichtung 16 wieder geringfügig soweit erwärmt, dass an dem Endbereich in der Förderrichtung des Extrusionskanales 15 die abschließende Formgebung der Querschnittsform der herzustellenden Verstärkungsstruktur 1 ausgeformt wird. Das in Fig. 1 linke Ende des Extrusionskanales 15 weist eine kreisförmige Querschnittsform auf, so dass dadurch mittels der Prozesseinheit 5 Verstärkungsstrukturen 1 mit einem kreisförmigen Querschnitt hergestellt werden. Nach dem Austreten der Verstärkungsstrukturen 1 aus dem Extrusionskanal 15 der Extrusionseinheit 7 wird von dem Gebläse 18 durch das Kühlrohr 19 Umgebungsluft als Kühlluft zu dem Stab 2 geleitet, so dass dadurch eine schnellere Abkühlung der Verstärkungsstrukturen 1 erreicht werden kann.

Die mit dem Verfahren hergestellten Verstärkungsstrukturen 1 sind als gerade oder gekrümmte Stäbe 2 ausgebildet. Die Stäbe 2 werden von der Prozesseinheit 5 an den erforderlichen Verbindungsposition auf einer Grundstruktur 4 hergestellt, so dass die Prozesseinheit 5 auf einer Bewegungsbahn 26 als einer Geraden 27 oder gekrümmten Linie 27 mittels Bewegungsarmen 28 eines in Fig. 2 stark vereinfacht dargestellten Roboters bewegt wird. Die Bewegungsbahn 26 als Gerade 27 oder gekrümmte Linie 27 entspricht dabei im Wesentlichen der Längsachse der von der Prozesseinheit 5 hergestellten Verstärkungsstruktur 1. Nach der Herstellung der Stäbe 2 und dem Auflegen der Stäbe 2 bzw. der Verstärkungsstrukturen 1 auf die Oberfläche der Grundstruktur 4 ist keine Relativbewegung bzw. Bewegung der hergestellten Stäbe 2 zu anderen bereits hergestellten oder noch herzustellenden Stäbe 2 oder zu der Grundstruktur 2 erforderlich, da die Stäbe 2 mit der Prozesseinheit 5 bereits an der erforderlichen Verbindungsposition auf der Grundstruktur 4 hergestellt werden. Dadurch können die Kosten für die Herstellung einer Tragstruktur 3 mit der Grundstruktur 4 und Verstärkungsstrukturen 1 mittels der Prozesseinheit 5 wesentlich reduziert werden. In Fig. 2 sind die Rollen 22 und die Hybridgarne 21 nicht dargestellt. Die Verstärkungsstruktur 1 besteht aus Stäben 2 aus dem Verbundmaterial 29, nämlich mit Fasern als Glasfasern und der Matrix als thermoplastischen Kunststoff.

In einem weiteren, nicht dargestellten Ausführungsbeispiel der Prozesseinheit 5 sind an den Rollen 22 die Fasern, z. B. Glas-, Aramid- oder Karbonfasern, aufgewickelt und die Matrix als dem thermoplastischen Kunststoff wird gesondert in einem Behälter mit einer Behälterheizung in einem erwärmten Zustand aufbewahrt und mittels einer nicht dargestellter Matrixfördereinrichtung zu der Pultrusionseinheit 6 gefördert. Die Pultrusionseinheit 6 und die Extrusionseinheit 7 kann auch als nur ein Bauteil ausgebildet sein, indem beispielsweise nach dem Pultrudieren unmittelbar das Extrudieren, d. h. die abschließende Formgebung einer Außenseite 33 des Stabe 2 ausgeführt wird, ohne dass die Fördereinrichtung 12 zwischen der Extrusionseinheit 7 und der Pultrusionseinheit 6 angeordnet ist.

In einem weiteren, nicht dargestellten Ausführungsbeispiel wird anstelle von thermoplastischem Kunststoff als der Matrix ein duroplastischer Kunststoff oder ein Kunststoff als ein reaktiver Hotmelt bzw. reaktiver Schmelzklebstoff bzw. reaktiver Schmelzpolymer eingesetzt. Der duroplastische Kunststoff wird gesondert in einem Behälter gelagert und mittels einer Matrixfördereinrichtung der Extrusionseinheit 7 und/oder der Pultrusionseinheit 6 zugeführt. Das Erhärten des duroplastischen Kunststoffes erfolgt dabei mittels einer Bestrahlung oder einer Zugabe von chemischen Additiven. Das Erhärten des Kunststoffes als reaktiver Hotmelt bzw. reaktiver Schmelzklebstoff bzw. reaktiver Schmelzpolymer wird insbesondere durch das Erwärmen als Veränderungsparameter während der Verarbeitung der Matrix in der Pultrusionseinheit 6 und/oder in der Extrusionseinheit 7 ausgeführt. Abweichend hiervon kann das Erhärten des Kunststoffes als reaktiver Hotmelt auch durch Feuchtigkeit und/oder UV-Licht und/oder Sauerstoffentzug ausgeführt werden. Bei einer Erhärtung durch UV-Licht erfolgt somit nach der Auflegen der wenigstens einen Verstärkungsstruktur 1 auf die Grundstruktur 4 eine Bestrahlung der wenigstens einen Verstärkungsstruktur 1 mit UV-Licht mittels einer UV-Lichtquelle (nicht dargestellt).

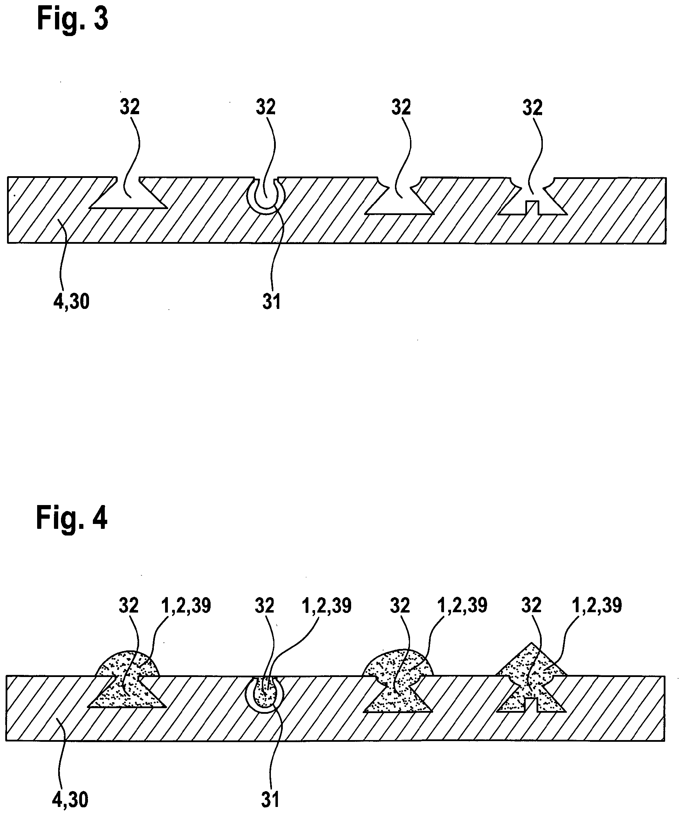

An der Prozesseinheit 5 sind Vorbearbeitungseinrichtungen 34, 36, 38 als ein Werkzeug 34 als ein Fräswerkzeug 35, eine Grundstrukturheizeinrichtung 36, beispielsweise ein Laser 37 oder ein Infrarotstrahler 38, und eine Zugabevorrichtung 39 für Klebstoff 31 befestigt (nur in Fig. 2 dargestellt). Das Werkzeug 34, die Grundstrukturheizeinrichtung 36 und die Zugabevorrichtung 39 sind mit mechanischen Einrichtungen relativ zu der Prozesseinheit 5 beweglich, so dass die Vorbearbeitungseinrichtungen 34, 36, 38 an unterschiedliche Bewegungsbahnen 26 mit unterschiedlichen Oberflächen von Grundstrukturen 4 in der erforderlichen Position angeordnet werden können. Vor dem Auflegen der an der Prozesseinheit 5 hergestellten Verstärkungsstruktur 1 auf die Oberfläche der Grundstruktur 4 wird mit dem Fräswerkzeug 35 eine längliche Aussparung 32 (Fig. 3) mit einer beliebigen Querschnittsform, abhängig von der Geometrie des Fräswerkzeuges 35, in die Grundstruktur 4 eingefräst. Die Aussparungen 32 weisen dabei einen Hinterschnitt auf, so dass nach dem Abkühlen und Erhärten des Verbundmateriales 29 mit den Fasern und der Matrix innerhalb der Aussparung 32 eine formschlüssige Verbindung der Stäbe 2 als Verstärkungsstruktur 1 an der Grundstruktur 1, beispielsweise Platten 30, ausgebildet ist.

Anschließend wird die Oberfläche der Grundstruktur 4 im Bereich der Aussparung 32 mit der Grundstrukturheizeinrichtung 36 erwärmt, so dass sich die Matrix des Verbundmateriales 29 stoffschlüssig mit dem Werkstoff der Grundstruktur 4 verbinden kann und nach dem Abkühlen und Erhärten des Verbundmateriales 29 und der Grundstruktur 4 eine feste stoffschlüssige Verbindung zwischen der Grundstruktur 4 und der Verstärkungsstruktur 1 besteht.

Anschließend wird mit der Zugabevorrichtung 39 wird auf die Oberfläche der Grundstruktur 4 im Bereich der Aussparung 32 Klebstoff 31 aufgebracht, um nach dem Auflegen der Verstärkungsstruktur 1 auf die Grundstruktur 4 und dem Erhärten des Klebstoffes 31 die Verstärkungsstruktur 1 stoffschlüssig mit der Grundstruktur 4 zu verbinden. Im Allgemeinen wird abhängig vom Werkstoff der Grundstruktur 4 nur die Grundstrukturheizeinrichtung 36 oder nur die Zugabevorrichtung 39 betrieben. Bei einer Grundstruktur 4 aus Metall, beispielsweise Stahl oder Aluminium, wird nur die Zugabevorrichtung 39 und nicht die Grundstrukturheizeinrichtung 36 betrieben. Bei einer Grundstruktur 4 aus thermoplastischen Kunststoff wird nicht die Zugabevorrichtung 39 und nur die Grundstrukturheizeinrichtung 36 betrieben.

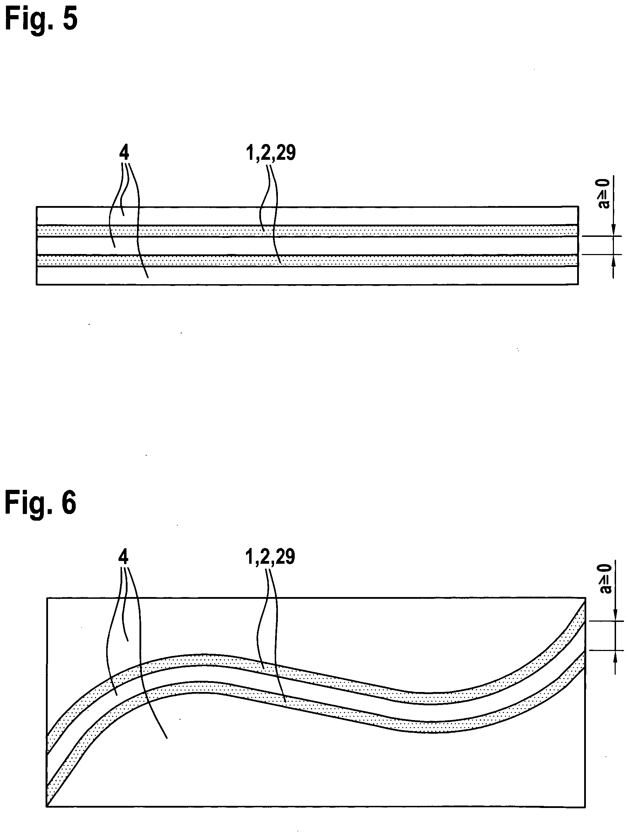

In Fig. 5 ist ein Querschnitt von Grundstrukturen 4 und Verstärkungsstrukturen 1 in einem ersten Ausführungsbeispiel dargestellt. Die Grundstrukturen 4 weisen eine gerade Oberfläche auf und die Grundstrukturen 4 und Verstärkungsstrukturen 1 sind schichtartig übereinander ausgebildet. Beispielsweise wird eine Schicht der Grundstruktur 4 mit einem 3D-Drucker hergestellt und anschließend die Verstärkungsstruktur 1 mit der Prozesseinheit 5. Die Stäbe 2 können auch ohne eine Abstand a zwischen zwei benachbarten Stäben 2 in einer Richtung senkrecht zu der Zeichenebene von Fig. 5 auf die Oberfläche der Grundstruktur 4 extrudiert werden, so dass auch die Verstärkungsstruktur 1 eine scheibenförmige Geometrie aufweisen kann.

In Fig. 6 ist ein Querschnitt von Grundstrukturen 4 und Verstärkungsstrukturen 1 in einem zweiten Ausführungsbeispiel dargestellt. Die Grundstrukturen 4 weisen eine gekrümmte Oberfläche auf und die Grundstrukturen 4 und Verstärkungsstrukturen 1 sind schichtartig übereinander ausgebildet, so dass auch die Verstärkungsstrukturen 1 gekrümmt ausgebildet sind.

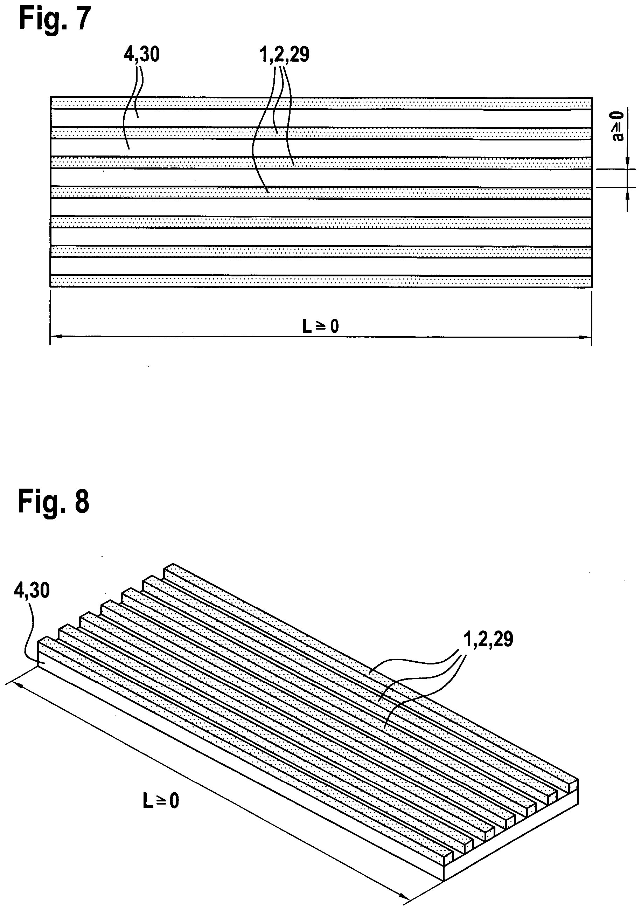

In Fig. 7 ist eine Draufsicht auf die Grundstruktur 4 und Verstärkungsstrukturen 1 und in Fig. 8 eine perspektivische Ansicht der Grundstruktur 4 mit Verstärkungsstrukturen 1 in einem dritten Ausführungsbeispiel dargestellt. Die Grundstruktur 4 weist eine gerade Oberfläche auf, so dass auch die Verstärkungsstrukturen 1 gerade sind. Die Verstärkungsstrukturen 1 weisen parallel zu der Zeichenebene von Fig. 7 einen Abstand a auf. Die stabförmigen Verstärkungsstrukturen 1 weisen eine Länge L auf als Längsausdehnung in einer Längsachse der Verstärkungsstrukturen 1.

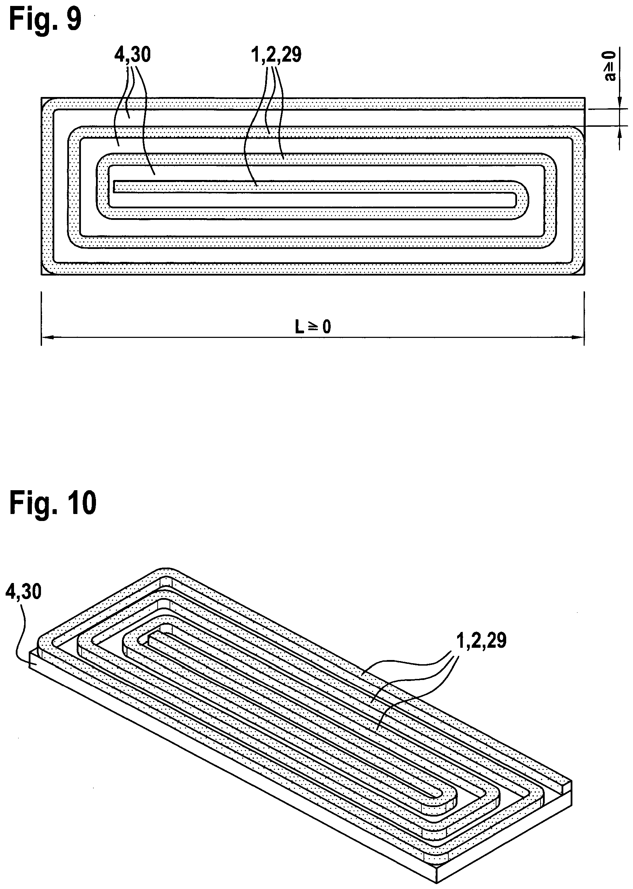

In Fig. 9 ist eine Draufsicht auf die Grundstruktur 4 und Verstärkungsstrukturen 1 und in Fig. 10 eine perspektivische Ansicht der Grundstruktur 4 mit Verstärkungsstrukturen 1 in einem vierten Ausführungsbeispiel dargestellt. Die Grundstruktur 4 weist eine gerade Oberfläche auf, so dass auch die Verstärkungsstrukturen 1 gerade sind. Die Verstärkungsstrukturen 1 weisen parallel zu der Zeichenebene von Fig. 9 einen Abstand a auf.

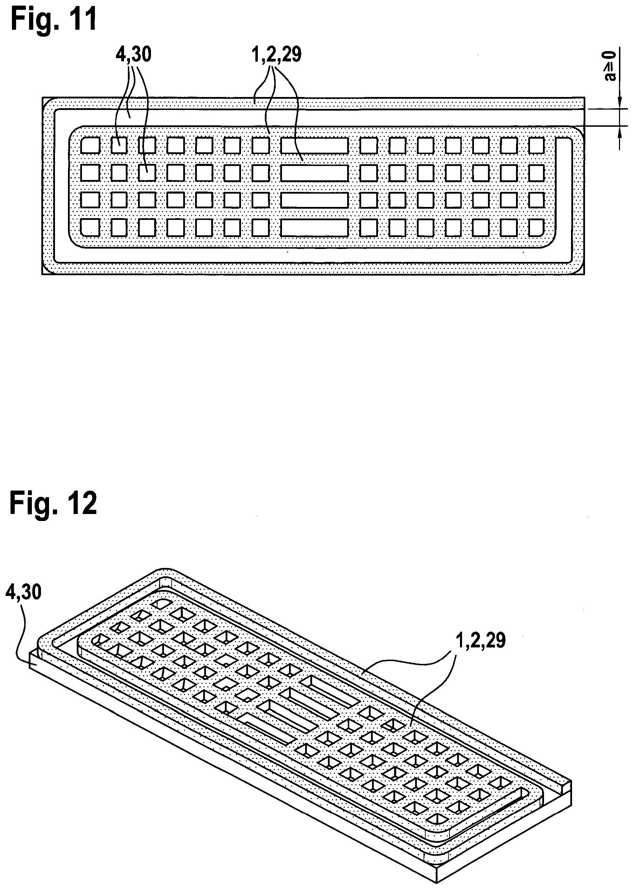

In Fig. 11 ist eine Draufsicht auf die Grundstruktur 4 und Verstärkungsstrukturen 1 und in Fig. 12 eine perspektivische Ansicht der Grundstruktur 4 mit Verstärkungsstrukturen 1 in einem fünften Ausführungsbeispiel dargestellt. Die Grundstruktur 4 weist eine gerade Oberfläche auf, so dass auch die Verstärkungsstrukturen 1 gerade sind. Die Verstärkungsstrukturen 1 weisen parallel zu der Zeichenebene von Fig. 7 einen Abstand a auf und ferner sind einzelne extrudierte Stäbe 2 stoffschlüssig ohne Abstand a miteinander verbunden indem die Prozesseinheit 5 mit einer entsprechenden Bewegungsbahn 26 bewegt wird. Zum stoffschlüssigen Verbinden der Stäbe 2 werden diese dahingehend extrudiert, dass die Matrix noch nicht abgekühlt ist und/oder die bereits extrudierten Stäbe 2 für die stoffschlüssige Verbindung erwärmt werden.

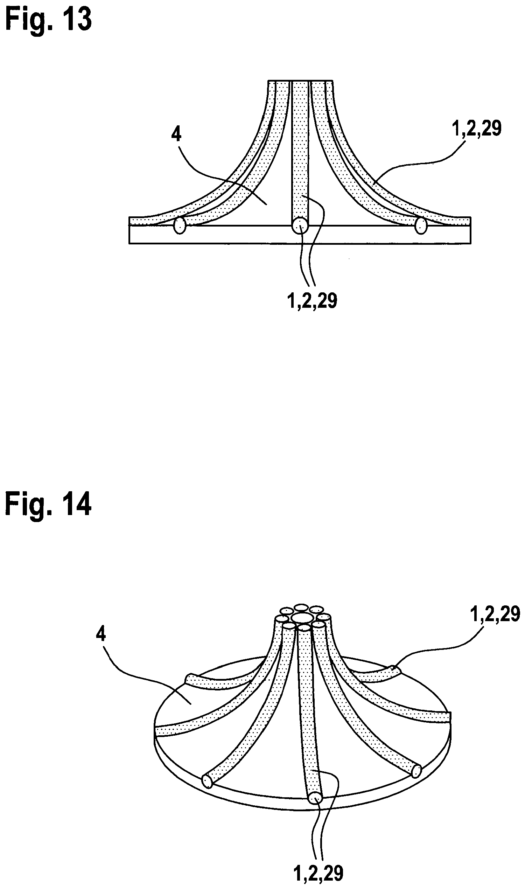

In Fig. 13 ist eine Seitenansicht auf die Grundstruktur 4 und Verstärkungsstrukturen 1 und in Fig. 14 eine perspektivische Ansicht der Grundstruktur 4 mit Verstärkungsstrukturen 1 in einem sechsten Ausführungsbeispiel dargestellt. Die Grundstruktur 4 weist eine gekrümmte Oberfläche auf, so dass auch die Verstärkungsstrukturen 1 gekrümmt sind. Die Verstärkungsstrukturen 1 sind teilweise in Aussparungen 32 der Grundstruktur 4 angeordnet.

Insgesamt betrachtet sind mit dem erfindungsgemäßen Verfahren zur Verstärkung der Grundstruktur 4 wesentliche Vorteile verbunden. Die Verstärkungsstrukturen 1 sind aus dem Verbundmaterial 29 mit Fasern und einer Matrix hergestellt. Die Prozesseinheit 5 wird dabei während der Herstellung entlang einer Längsachse der herzustellenden Verstärkungsstruktur 1, insbesondere Stabes 2, als eine gerade oder gekrümmte Bewegungsbahn 26 bewegt, so dass dadurch die Stäbe 2 aus dem Verbundmaterial 29 an der erforderlichen Verbindungsposition bereits auf der Oberfläche der Grundstruktur 4 hergestellt werden können und dadurch die Kosten für die Herstellung der Tragstruktur 3 wesentlich reduziert sind. Bei einem Einsatz des Hybridgarnes 21 ist der Anteil von der Matrix und den Fasern in den Stäben 2 konstant. Durch den Einsatz einer unterschiedlichen Anzahl an Hybridgarnen 21 bzw. Fasern zur Herstellung jeweils eines Stabes 2 ist es auch möglich, Stäbe 2 mit einem unterschiedlichen Durchmesser herzustellen. Ferner können die Stäbe 2 auch in einer unterschiedlichen Querschnittsform hergestellt werden. Hierzu weist das Ende des Extrusionskanales 15 ein in Fig. 1 nicht dargestelltes austauschbares Formgebungsteil auf, so dass dadurch auch Stäbe 2 neben der beschriebenen Kreisform auch als ellipsenförmige Stäbe 2 oder rechteckförmige Stäbe 2 in der Querschnittsform einfach hergestellt werden können. Die Anpassung der Verstärkungsstrukturen 1 an Grundstrukturen 4 mit unterschiedlichsten Geometrien kann einfach und preiswert dadurch erfolgen, dass der Roboter die Proesseinheit 5 lediglich auf einer angepassten Bewegungsbahn 26 bewegt. Hierzu weist der Roboter entweder Sensoren zur Erfassung der Geometrie der Grundstruktur 4 auf und/oder die Geometrie der Grundstruktur 4 ist in einer Recheneinheit des Roboters gespeichert. Aufgrund der Daten zur Geometrie der Grundstruktur 4 kann mit der Recheneinheit die Bewegungsbahn 26 berechnet werden bei vorgegebener Position für die wenigstens eine Verstärkungsstruktur 1. Die Anpassung der Geometrie der wenigstens eine Verstärkungsstruktur 1 an die Geometrie der Grundstruktur 4 kann somit ausschließlich programm- und/oder datentechnisch ausgeführt werden, weil mit dem Roboter beliebige Bewegungsbahnen 26 im Raum ausgeführt werden können.

## Patentansprüche

1. Verfahren zur Verstärkung einer vorhandenen Grundstruktur (4) mit wenigstens einer Verstärkungsstruktur (1) zu einer Tragstruktur (3) mit den Schritten:
- zur Verfügung stellen oder Herstellen der wenigstens einen Verstärkungsstruktur (1),
- Verbinden der wenigstens einen Verstärkungsstruktur (1) mit der Grundstruktur (4), so dass die wenigstens eine Verstärkungsstruktur (1) in einer Verbindungsposition mit der Grundstruktur (4) verbunden ist und die Grundstruktur (4) zusammen mit der wenigstens einen Verstärkungsstruktur (1) die Tragstruktur (3) bildet,
wobei die wenigstens eine Verstärkungsstruktur (1), insbesondere sämtliche Verstärkungsstrukturen (1), aus einem Verbundmaterial (29) mit Fasern und einer Matrix mittels Pultrusion und/oder mit Extrusion hergestellt wird bzw. werden und eine Pultrusionseinheit (6) und/oder eine Extrusionseinheit (7) im Raum bewegt wird, so dass die wenigstens eine Verstärkungsstruktur (1), insbesondere sämtliche Verstärkungsstrukturen (1), nach der Pultrusion und/oder Extrusion jeweils an der erforderlichen Verbindungsposition auf die Grundstruktur (4) pultrudiert und/oder extrudiert wird bzw. werden, **dadurch gekennzeichnet, dass** vor dem Auflegen der wenigstens einen Verstärkungsstruktur (1) auf die Oberfläche der Grundstruktur (4) an der Oberfläche der Grundstruktur (4) lokal im Bereich einer späteren Kontaktfläche zwischen der wenigstens einen Verstärkungsstruktur (1) und der Grundstruktur (4) der Werkstoff der Grundstruktur (4) abgetragen wird.

2. Verfahren nach Anspruch 1,
**dadurch gekennzeichnet, dass**
mit der pultrudierten und/oder extrudierten wenigstens einen Verstärkungsstruktur (1), insbesondere sämtlichen Verstärkungsstrukturen (1), nach dem Pultrudieren und/oder Extrudieren und dem Auflegen auf die Grundstruktur (4) keine Bewegung relativ zu der Grundstruktur (4) ausgeführt wird bzw. werden
und/oder
die Matrix der pultrudierten und/oder extrudierten Verstärkungsstruktur (1), insbesondere sämtliche Verstärkungsstrukturen (1), an der erforderlichen Verbindungsposition an und/oder auf der Grundstruktur (4) erhärtet
und/oder
die Pultrusion und Extrusion gleichzeitig und/oder kontinuierlich ausgeführt wird.

3. Verfahren nach Anspruch 1 oder 2,
**dadurch gekennzeichnet, dass**
die wenigstens eine Verstärkungsstruktur (1), vorzugsweise sämtliche Verstärkungsstrukturen (1), insbesondere kontinuierlich, hergestellt wird bzw. werden, indem die Pultrusionseinheit (6) und/oder Extrusionseinheit (7), insbesondere kontinuierlich, im Raum in einer Bewegungsbahn (26) bewegt wird an der erforderlichen Verbindungsposition in einem Abstand zu der Grundstruktur (4).

4. Verfahren nach einem oder mehreren der vorhergehenden Ansprüche, **dadurch gekennzeichnet, dass**
die wenigstens eine Verstärkungsstruktur (1) als ein gerader oder gekrümmter Stab (2) hergestellt wird.

5. Verfahren nach einem oder mehreren der vorhergehenden Ansprüche,
**dadurch gekennzeichnet, dass**
die Querschnittsform der wenigstens einen Verstärkungsstruktur (1), insbesondere sämtlicher Verstärkungsstrukturen (1), beim Extrudieren und/oder beim Auflegen auf die Grundstruktur (4) ausgebildet wird bzw. werden
und/oder
die Länge der Verstärkungsstruktur (1), insbesondere sämtlicher Verstärkungsstrukturen (1), durch die Länge der Bewegungsbahn (26) der Pultrusionseinheit (6) und/oder Extrusionseinheit (7) ausgebildet wird bzw. werden.

6. Verfahren nach einem oder mehreren der vorhergehenden Ansprüche,
**dadurch gekennzeichnet, dass**
die Fasern und vorzugsweise die Matrix kontinuierlich zuerst durch die Pultrusionseinheit (6) und anschließend durch die Extrusionseinheit (7) gefördert werden.

7. Verfahren nach einem oder mehreren der vorhergehenden Ansprüche,
**dadurch gekennzeichnet, dass**
die wenigstens eine Verstärkungsstruktur (1), insbesondere sämtliche Verstärkungsstrukturen (1), aus einem Verbundmaterial (29) mit Fasern und einer Matrix mittels Pultrusion und/oder mit Extrusion hergestellt wird bzw. werden und eine Pultrusionseinheit (6) und/oder eine Extrusionseinheit (7) im Raum bewegt wird, so dass bezüglich der Länge der jeweiligen Verstärkungsstruktur (1) zu mehr als 50%, 70%, 80% oder 90% mit der Grundstruktur (4) verbunden sind, so dass die Länge der Verbindung zwischen der Verstärkungsstruktur (1) und der Grundstruktur (4) größer ist als 50%, 70%, 80% oder 90% der Länge der Verstärkungsstruktur (1).

8. Verfahren nach Anspruch 1,
**dadurch gekennzeichnet, dass**
die Grundstruktur (4) spanabhebend abgetragen wird, insbesondere mit einem Werkzeug (34), vorzugsweise Fräswerkzeug (35), und das Werkzeug (34) von einem Roboter entlang der Oberfläche der Grundstruktur (4) bewegt wird.

9. Verfahren nach Anspruch 1 bis 8,
**dadurch gekennzeichnet, dass**
in die Grundstruktur (4) aufgrund des Abtragens des Werkstoffes der Grundstruktur (4) eine, vorzugsweise längliche, Aussparung (32) eingearbeitet wird und in die Aussparung (32) anschließend die wenigstens eine Verstärkungsstruktur (1) eingeführt wird, so dass eine formschlüssige Verbindung zwischen der wenigstens einen Verstärkungsstruktur (1) und der Grundstruktur (4) an der Aussparung (32), insbesondere nach dem Abkühlen und Erhärten der Matrix, ausgebildet wird.

10. Verfahren nach einem oder mehreren der vorhergehenden Ansprüche,
**dadurch gekennzeichnet, dass**
vor dem Auflegen der wenigstens einen Verstärkungsstruktur (1) auf die Oberfläche der Grundstruktur (4) die Oberfläche der Grundstruktur (4) lokal im Bereich einer späteren Kontaktfläche zwischen der wenigstens einen Verstärkungsstruktur (1) und der Grundstruktur (4) mit einer Grundstrukturheizeinrichtung (36), insbesondere einem Laser (37) oder einem Infrarotstrahler (38), erwärmt wird.

11. Verfahren nach Anspruch 10,
**dadurch gekennzeichnet, dass**
die Grundstrukturheizeinrichtung (36) von einem Roboter entlang der Oberfläche der Grundstruktur (4) bewegt wird
und/oder
aufgrund des Erwärmens der Oberfläche der Grundstruktur (4) lokal im Bereich einer späteren Kontaktfläche zwischen der wenigstens einen Verstärkungsstruktur (1) und der Grundstruktur (4) der Werkstoff der Grundstruktur seine Eigenschaft verändert, insbesondere zähfließend und/oder klebrig und/oder flüssig wird, so dass eine stoffschlüssige Verbindung zwischen der Matrix der wenigstens einen Verstärkungsstruktur (1) und dem Werkstoff der Grundstruktur (4), insbesondere nach dem Abkühlen, ausgebildet wird.

12. Verfahren nach einem oder mehreren der vorhergehenden Ansprüche,
**dadurch gekennzeichnet, dass**
vor dem Auflegen der wenigstens einen Verstärkungsstruktur (1) auf die Oberfläche der Grundstruktur (4) lokal im Bereich einer späteren Kontaktfläche zwischen der wenigstens einen Verstärkungsstruktur (1) und der Grundstruktur (4) mit einer Zugabevorrichtung (39) ein Stoff, insbesondere ein Klebstoff und/oder ein Haftvermittler, zur Verbesserung der Verbindung zwischen der wenigstens einen Verstärkungsstruktur (1) und der Grundstruktur (4) aufgebracht wird.

13. Prozesseinheit (5) eingerichtet von einem Roboter mit Bewegungsarmen (28) bewegt zu werden und eingerichtet das Verfahren nach einem der Ansprüche 1-12 durchzuführen, umfassend:
- eine Pultrusionseinheit (6) mit einem Pultrusionskanal (9), der in Förderrichtung einen ersten Abschnitt gefolgt von einem zweiten Abschnitt aufweist, wobei im zweiten Abschnitt eine erste Heizeinrichtung (8) gefolgt von einer ersten Kühleinrichtung (10) angeordnet sind,
- eine Extrusionseinheit (7) mit einem Extrusionskanal (15), der in Förderrichtung einen ersten Abschnitt gefolgt von einem zweiten Abschnitt aufweist, wobei am zweiten Abschnitt eine zweite Heizeinrichtung (16) ausgebildet ist,
- eine Fördereinrichtung (12), die zwischen der Pultrusionseinheit (6) und der Extrusionseinheit (7) angeordnet ist, zum Fördern des Verbundmaterials (29) von der Pultrusionseinheit (6) in die Extrusionseinheit (7), **gekennzeichnet durch**
- ein Fräswerkzeug (35) zum spanabhebenden Abtragen der Grundstruktur (4).

14. Computerprogramm mit Programmcodemitteln, um ein Verfahren gemäß einem oder mehrerer der Ansprüche 1 bis 12 durchzuführen, wenn das Computerprogramm auf einem Computer durchgeführt wird, der an eine Prozesseinheit (5) gemäß Anspruch 13 angeschlossen ist.

## Claims

1. A method for reinforcing an existing base structure (4) with at least one reinforcing structure (1) to form a supporting structure (3), comprising the steps of:
- providing or manufacturing the at least one reinforcing structure (1),
- connecting the at least one reinforcing structure (1) to the base structure (4), so that the at least one reinforcing structure (1) is connected to the base structure (4) in a connection position and the base structure (4) together with the at least one reinforcing structure (1) forms the support structure (3),
wherein
the at least one reinforcing structure (1), in particular all reinforcing structures (1), is or are produced from a composite material (29) with fibres and a matrix by means of pultrusion and/or extrusion and a pultrusion unit (6) and/or an extrusion unit (7) is or are moved in space, so that the at least one reinforcing structure (1), in particular all reinforcing structures (1), is or are pultruded and/or extruded onto the base structure (4) in each case at the required connection position after the pultrusion and/or extrusion,
**characterised in that**
before the at least one reinforcing structure (1) is placed on the surface of the base structure (4), the material of the base structure (4) is removed locally on the surface of the base structure (4) in the region of a later contact surface between the at least one reinforcing structure (1) and the base structure (4).

2. The method according to claim 1,
**characterised in that**
no movement relative to the base structure (4) is or are carried out with the pultruded and/or extruded at least one reinforcing structure (1), in particular all reinforcing structures (1), after pultrusion and/or extrusion and placement on the base structure (4)
and/or
the matrix of the pultruded and/or extruded reinforcing structure (1), in particular all reinforcing structures (1), hardens at the required connection position on and/or to the base structure (4) and/or
the pultrusion and extrusion are carried out simultaneously and/or continuously.

3. The method according to claim 1 or 2,
**characterised in that**
the at least one reinforcing structure (1), preferably all reinforcing structures (1), are or will be produced, in particular continuously, by moving the pultrusion unit (6) and/or extrusion unit (7), in particular continuously, in space in a movement path (26) at the required connection position at a distance from the base structure (4).

4. The method according to one or more of the preceding claims, **characterised in that** the at least one reinforcing structure (1) is produced as a straight or curved rod (2).

5. The method according to one or more of the preceding claims,
**characterised in that**
the cross-sectional shape of the at least one reinforcing structure (1), in particular of all reinforcing structures (1), is or are formed during extrusion and/or during placement on the base structure (4)
and/or
the length of the reinforcing structure (1), in particular of all reinforcing structures (1), is or are formed by the length of the movement path (26) of the pultrusion unit (6) and/or extrusion unit (7).

6. The method according to one or more of the preceding claims,
**characterised in that**
the fibres and preferably the matrix are continuously conveyed first through the pultrusion unit (6) and then through the extrusion unit (7).

7. The method according to one or more of the preceding claims,
**characterised in that**
the at least one reinforcing structure (1), in particular all reinforcing structures (1), is or are produced from a composite material (29) with fibres and a matrix by means of pultrusion and/or extrusion, and a pultrusion unit (6) and/or an extrusion unit (7) is or are moved in space so that, with respect to the length of the respective reinforcing structure (1) more than 50%, 70%, 80%, or 90% of the length of the respective reinforcing structure (1) is connected to the base structure (4), so that the length of the connection between the reinforcing structure (1) and the base structure (4) is greater than 50%, 70%, 80% or 90% of the length of the reinforcing structure (1).

8. The method according to claim 1,
**characterised in that**
the base structure (4) is removed by machining, in particular with a tool (34), preferably a milling tool (35), and the tool (34) is moved along the surface of the base structure (4) by a robot.

9. The method according to claim 1 to 8,
**characterised in that**
a, preferably elongated, recess (32) is machined into the base structure (4) as a result of the removal of the material of the base structure (4) and the at least one reinforcing structure (1) is then introduced into the recess (32), so that a positive connection is formed between the at least one reinforcing structure (1) and the base structure (4) at the recess (32), in particular after the matrix has cooled and hardened.

10. The method according to one or more of the preceding claims,
**characterised in that**
before the at least one reinforcing structure (1) is placed on the surface of the base structure (4), the surface of the base structure (4) is heated locally in the region of a later contact surface between the at least one reinforcing structure (1) and the base structure (4) using a base structure heating device (36), in particular a laser (37) or an infrared radiator (38).

11. The method according to claim 10,
**characterised in that**
the base structure heating device (36) is moved along the surface of the base structure (4) by a robot and/or
due to the heating of the surface of the base structure (4) locally in the region of a later contact surface between the at least one reinforcing structure (1) and the base structure (4), the material of the base structure changes its property, in particular becomes viscous and/or sticky and/or liquid, so that a material-locking bond is formed between the matrix of the at least one reinforcing structure (1) and the material of the base structure (4), in particular after cooling.

12. The method according to one or more of the preceding claims,
**characterised in that**
before the at least one reinforcing structure (1) is placed on the surface of the base structure (4), a substance, in particular an adhesive and/or an adhesion promoter, is applied locally in the region of a later contact surface between the at least one reinforcing structure (1) and the base structure (4) using an additive device (39) in order to improve the bond between the at least one reinforcing structure (1) and the base structure (4).

13. A processing unit (5) adapted to be moved by a robot with moving arms (28) and adapted to perform the method according to any one of claims 1-12, comprising
- a pultrusion unit (6) having a pultrusion channel (9) which has a first section followed by a second section in the conveying direction, wherein a first heating device (8) followed by a first cooling device (10) are arranged in the second section,
- an extrusion unit (7) with an extrusion channel (15) which has a first section followed by a second section in the conveying direction, a second heating device (16) being formed on the second section,
- a conveying device (12), which is arranged between the pultrusion unit (6) and the extrusion unit (7), for conveying the composite material (29) from the pultrusion unit (6) into the extrusion unit (7),
**characterised by**
- a milling tool (35) for removing the base structure (4) by machining.

14. A computer program comprising program code means for carrying out a method according to one or more of the claims 1 to 12, when the computer program is carried out on a computer connected to a process unit (5) according to claim 13.

## Revendications

1. Procédé de renforcement d'une structure de base existante (4) avec au moins une structure de renforcement (1) pour former une structure porteuse (3), comprenant les étapes :
- mise à disposition ou fabrication de l'au moins une structure de renforcement (1),
- relier l'au moins une structure de renforcement (1) à la structure de base (4), de sorte que l'au moins une structure de renforcement (1) est reliée à la structure de base (4) dans une position de liaison et la structure de base (4) forme la structure porteuse (3) conjointement avec l'au moins une structure de renforcement (1),
où
l'au moins une structure de renforcement (1), en particulier toutes les structures de renforcement (1), est ou sont fabriquées à partir d'un matériau composite (29) avec des fibres et une matrice par pultrusion et/ou par extrusion et une unité de pultrusion (6) et/ou une unité d'extrusion (7) est déplacée dans l'espace, de sorte que l'au moins une structure de renforcement (1), en particulier toutes les structures de renforcement (1), est ou sont pultrudées et/ou extrudées après la pultrusion et/ou l'extrusion respectivement à la position de liaison nécessaire sur la structure de base (4),
**caractérisé en ce que**
avant la pose de l'au moins une structure de renforcement (1) sur la surface de la structure de base (4), le matériau de la structure de base (4) est enlevé localement sur la surface de la structure de base (4) dans la zone d'une surface de contact ultérieure entre l'au moins une structure de renforcement (1) et la structure de base (4).

2. Procédé selon la revendication 1,
**caractérisé en ce que**
avec l'au moins une structure de renforcement (1) pultrudée et/ou extrudée, en particulier toutes les structures de renforcement (1), après la pultrusion et/ou l'extrusion et la pose sur la structure de base (4), aucun mouvement n'est ou ne sont effectué(s) par rapport à la structure de base (4).
et/ou
la matrice de la structure de renforcement (1) pultrudée et/ou extrudée, en particulier toutes les structures de renforcement (1), durcit à la position d'assemblage requise sur et/ou contre la structure de base (4)
et/ou
la pultrusion et l'extrusion sont réalisées simultanément et/ou en continu.

3. Procédé selon la revendication 1 ou 2,
**caractérisé en ce que**
l'au moins une structure de renforcement (1), de préférence toutes les structures de renforcement (1), sont fabriquées, en particulier de manière continue en déplaçant l'unité de pultrusion (6) et/ou l'unité d'extrusion (7), en particulier en continu, dans l'espace selon une trajectoire de déplacement (26) à la position d'assemblage requise à distance de la structure de base (4).

4. Procédé selon une ou plusieurs des revendications précédentes, **caractérisé en ce que** l'au moins une structure de renforcement (1) est fabriquée sous la forme d'une barre droite ou incurvée (2).

5. Procédé selon une ou plusieurs des revendications précédentes,
**caractérisé en ce que**
la forme de la section transversale d'au moins une structure de renforcement (1), en particulier de toutes les structures de renforcement (1), est ou sont formée(s) lors de l'extrusion et/ou lors de la pose sur la structure de base (4)
et/ou
la longueur de la structure de renforcement (1), en particulier de toutes les structures de renforcement (1), est ou sont formées par la longueur de la trajectoire (26) de l'unité de pultrusion (6) et/ou de l'unité d'extrusion (7).

6. Procédé selon une ou plusieurs des revendications précédentes,
**caractérisé en ce que**
les fibres et de préférence la matrice sont transportées en continu d'abord à travers l'unité de pultrusion (6) et ensuite à travers l'unité d'extrusion (7).

7. Procédé selon une ou plusieurs des revendications précédentes,
**caractérisé en ce que**
l'au moins une structure de renforcement (1), en particulier toutes les structures de renforcement (1), est ou sont fabriquées à partir d'un matériau composite (29) avec des fibres et une matrice par pultrusion et/ou par extrusion. et une unité de pultrusion (6) et/ou une unité d'extrusion (7) est déplacée dans l'espace, de sorte que, par rapport à la longueur de la structure de renforcement respective (1), plus de 50%, 70%, 80% ou 90% sont reliés à la structure de base (4), de sorte que la longueur de la liaison entre la structure de renforcement (1) et la structure de base (4) est supérieure à 50%, 70%, 80% ou 90% de la longueur de la structure de renforcement (1).

8. Procédé selon la revendication 1,
**caractérisé en ce que**
la structure de base (4) est usinée, en particulier avec un outil (34), de préférence un outil de fraisage (35), et l'outil (34) est déplacé par un robot le long de la surface de la structure de base (4).

9. Procédé selon les revendications 1 à 8,
**caractérisé en ce que**
un évidement (32), de préférence allongé, est usiné dans la structure de base (4) en raison de l'enlèvement du matériau de la structure de base (4) et l'au moins une structure de renforcement (1) est ensuite introduite dans l'évidement (32), de sorte qu'une liaison par complémentarité de forme est formée entre l'au moins une structure de renforcement (1) et la structure de base (4) au niveau de l'évidement (32), en particulier après le refroidissement et le durcissement de la matrice.

10. Procédé selon une ou plusieurs des revendications précédentes,
**caractérisé en ce que**
avant de poser l'au moins une structure de renforcement (1) sur la surface de la structure de base (4), la surface de la structure de base (4) est chauffée localement dans la zone d'une surface de contact ultérieure entre l'au moins une structure de renforcement (1) et la structure de base (4) avec un dispositif de chauffage de la structure de base (36), en particulier un laser (37) ou un radiateur infrarouge (38).

11. Procédé selon la revendication 10,
**caractérisé en ce que**
le dispositif de chauffage de la structure de base (36) est déplacé par un robot le long de la surface de la structure de base (4)
et/ou
en raison du chauffage de la surface de la structure de base (4), localement dans la zone d'une surface de contact ultérieure entre l'au moins une structure de renforcement (1) et la structure de base (4), le matériau de la structure de base modifie sa propriété, en particulier devient visqueux et/ou collant et/ou liquide, de sorte qu'une liaison par matière est formée entre la matrice de l'au moins une structure de renforcement (1) et le matériau de la structure de base (4), en particulier après le refroidissement.

12. Procédé selon une ou plusieurs des revendications précédentes,
**caractérisé en ce que**
avant de poser l'au moins une structure de renforcement (1) sur la surface de la structure de base (4), on applique localement, dans la zone d'une surface de contact ultérieure entre l'au moins une structure de renforcement (1) et la structure de base (4), à l'aide d'un dispositif additif (39), une substance, en particulier une colle et/ou un agent adhésif, pour améliorer la liaison entre l'au moins une structure de renforcement (1) et la structure de base (4).

13. Unité de traitement (5) adaptée pour être déplacée par un robot avec des bras de déplacement (28) et adaptée pour réaliser le procédé selon l'une des revendications 1 à 12, comprenant :
- une unité de pultrusion (6) avec un canal de pultrusion (9) qui présente, dans la direction de transport, une première section suivie d'une deuxième section, un premier dispositif de chauffage (8) suivi d'un premier dispositif de refroidissement (10) étant disposés dans la deuxième section,
- une unité d'extrusion (7) avec un canal d'extrusion (15), qui présente dans la direction de transport une première section suivie d'une deuxième section, un deuxième dispositif de chauffage (16) étant formé sur la deuxième section,
- un dispositif de transport (12), qui est disposé entre l'unité de pultrusion (6) et l'unité d'extrusion (7), pour transporter le matériau composite (29) de l'unité de pultrusion (6) dans l'unité d'extrusion (7),
**caractérisé par**
- un outil de fraisage (35) pour l'enlèvement de la structure de base (4) par usinage.

14. Programme informatique comprenant des moyens de code de programme pour mettre en oeuvre un procédé selon une ou plusieurs des revendications 1 à 12, lorsque le programme informatique est mis en oeuvre sur un ordinateur connecté à une unité de traitement (5) selon la revendication 13.
